# EUROPÄISCHE PATENTSCHRIFT

(11) **EP 0 540 463 B1**
(45) Veröffentlichungstag und Bekanntmachung des Hinweises auf die Patenterteilung: **31.08.1994**
(21) Anmeldenummer: 92810770.5
(22) Anmeldetag: 09.10.1992
(51) Int. Cl.: F16B 19/14, F16B 43/00

(54) **Nagel mit Hülse und Rondelle**
Nail with sleeve and washer
Clou avec chemise et rondelle

(30) Priorität: 28.10.1991 DE 4135500
(43) Veröffentlichungstag der Anmeldung: 05.05.1993
(73) Patentinhaber: HILTI Aktiengesellschaft, 9494 Schaan (LI)
(72) Erfinder: Hoepker, Elmer-Christ, FL-9494 Planken (LI); Hachtel, Hans, FL-9494 Schaan (LI); Gassmann, Horst-Detlef, FL-9491 Ruggell (LI)
(74) Vertreter: Wildi, Roland

(56) Entgegenhaltungen:
- DE-A- 2 149 165
- DE-A- 2 237 528
- DE-A- 3 743 049
- FR-A- 2 439 326
- GB-A- 1 544 115
- US-A- 2 949 141

## Beschreibung

Die Erfindung betrifft einen Nagel mit konischem Schaft, ballistischer Spitze, Kopf entgegen dem Eintreibende, sowie auf dem Schaft aufgezogener Rondelle und Hülse.

Zum Befestigen dünner Bleche sind aus der DE-A-22 37 528 Nägel mit konischem Schaft bekannt, bei denen der Schaft hintereinander angeordnet zwei tellerförmige Rondellen aufweist. Ferner ist aus der DE-A-37 43 049 bekannt, eine Rondelle und im Bereich der Spitze eine Hülse auf dem Schaft anzuordnen.

Im ersten Fall wird durch die hintereinander liegenden Rondellen eine einmal eingestellte Treibladungsstärke bei verschiedenen Eintreibwiderständen ausgeglichen. Im zweiten Fall dient die Auflage der Hülse einem einwandfreien Anpressen des Bleches. Eine in bestimmten Anwendungsfällen auftauchende Problematik besteht darin, dass beim Auftreffen der Rondelle bzw. der Hülse auf das Blech an den Randzonen dieser Teile an dem zu befestigenden Blech Verformungen auftreten, was unter Last zu verschiedenen Zerstörungen des Bleches und der Verbindung führen kann.

Die Erfindung hat sich die Aufgabe gestellt, die erwähnten Nachteile bei der Befestigung dünner Bleche zu beseitigen und eine dauerhafte und solide Befestigung der Bleche herzustellen sowie hohe Belastungen bei Querzug zu gewährleisten.

Erfindungsgemäss wird die Aufgabe dadurch gelöst, dass im Bereich der Spitze die Rondelle und zwischen Rondelle und Kopf die Hülse angeordnet ist, wobei die Rondelle gegenüber der Hülse eine höhere Steifigkeit aufweist.

Unter Ausnutzung der unterschiedlichen Steifigkeit von Hülse und Rondelle wird erreicht, dass die resultierende elastische Spannung des Systems als Anpresskraft, die auf das zu befestigende Blech wirkt, ausgenutzt wird. Dank der hohen Steifigkeit der Rondelle steht deren ganze Umfangskontur zur Übertragung der Anpresskraft zur Verfügung, so dass hohe Querzugswerte erzielt werden.

Durch den zum Kopf hin sich verjüngenden Konus an der zum Kopf hin gerichteten Seite der Rondelle und der korrespondierenden Innenform der Hülse schieben sich beim Aufeinandertreffen die Bereiche der beiden Elemente aufeinander. Die dadurch entstehende elastische Verspannung ergibt im Zusammenhang mit der unterschiedlichen Steifigkeit der beiden Elemente eine haltbare und solide Befestigung des Bleches.

Die besondere Form der zur Spitze weisenden Seite der Rondelle in Form einer Ausnehmung berücksichtigt die beim Eintreibvorgang entstehende Aufwölbung des Grundmaterials und des Bleches. Die zudem an dieser Seite der Rondelle vorzugsweise enthaltene Ausnehmung schafft einen kreisringförmigen Rand an der Rondelle, so dass beidseits dieses Randes den Querzug erhöhende Aufwölbungen entstehen. Es wird dadurch eine Art Formschluss zwischen Rondelle und Blech geschaffen.

Schliesslich setzt eine sichere Funktionsweise in einem dem Setzen der Nägel dienenden Gerät, insbesondere im Zusammenhang mit der Führung, voraus, dass zweckmässigerweise der Aussendurchmesser der Hülse nicht grösser als der Aussendurchmesser der Rondelle ist. Zudem ist mit diesen Abmessungsverhältnissen sichergestellt, dass die von der Hülse erzeugte Spannung auf den äusseren Bereich der Rondelle wirkt, was für die Erreichung hoher Querzugswerte massgebend ist.

Die aufgebrachten Federkräfte betragen im allgemeinen zwischen 500 bis 2000 N und bewirken ein solides Festhalten des Bleches, ohne dass es zu Störungen infolge örtlicher Verformungen kommt, so dass Störungen bei dynamischen Belastungen und Schockbelastungen vermieden werden.

Die Erfindung wird nachstehend anhand von Zeichnungen, welche Ausführungsbeispiele wiedergeben, näher erläutert. Es zeigen:
- Fig. 1: einen Nagel mit Rondelle und Hülse;
- Fig. 2: einen Nagel mit Rondelle und einer weiteren Ausführungsform einer Hülse.

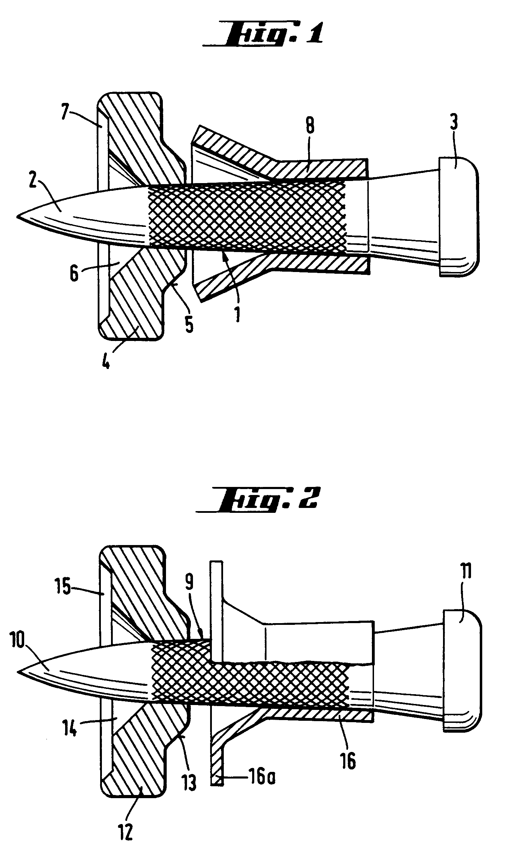

Der aus Fig. 1 ersichtliche Nagel besitzt einen konischen Schaft 1, eine ballistische Spitze 2 sowie an dem an der Spitze 2 abgewandten Ende des Schaftes 1 einen Kopf 3. Der Schaft 1 kann - wie die Fig. 1 andeutungsweise zeigt - unterschiedliche Konizitäten aufweisen.

Im Bereich der Spitze 2 ist eine Rondelle 4 auf den Schaft 1 aufgezogen. Diese Rondelle 4 weist einen sich zum Kopf 3 hin verjüngenden Konus 5 auf. Die der Spitze 2 zugewandte Seite der Rondelle 4 weist eine sich nach aussen erweiternde Ausnehmung 6 sowie eine flächenmässige Vertiefung 7 auf.

Zwischen Rondelle 4 und Kopf 3 ist auf dem Schaft 1 eine Hülse 8 aufgezogen. Diese Hülse 8 weist an der zur Rondelle 4 weisenden Seite eine sich konisch zum Kopf 3 hin verjüngende Innenform auf.

Aus Fig. 2 ist wiederum ein Nagel entnehmbar, der einen konischen Schaft 9 mit ballistischer Spitze 10 an einem Ende und einen Kopf 11 am anderen Ende aufweist. Analog dem Nagel der Fig. 1 kann auch beim Nagel entsprechend Fig. 2 der Schaft 9 mit unterschiedlichen Konizitäten versehen sein und eine Randrierung - wie beispielhaft dargestellt - aufweisen.

Im Bereich der Spitze 10 ist eine Rondelle 12 auf den Schaft 9 aufgezogen. Diese Rondelle 12 weist zum Kopf 11 hin einen sich verjüngenden Konus 13 auf. Die der Spitze 10 zugewandte Seite der Rondelle ist mit einer Ausnehmung 14 sowie einer flächenmässigen Vertiefung 15 versehen.

Zwischen Rondelle 12 und Kopf 11 ist auf den Schaft 9 eine Hülse 16 aufgezogen. Diese Hülse 16 weist zur Rondelle 12 hin eine konische Innenform auf, wobei zudem das der Rondelle 12 zugewandte Ende der Hülse 16 in einen Flansch 16a ausläuft.

Die Funktion der in den beiden Figuren gezeigten Nägel ist beim Befestigen dünner Bleche gleich. Beim Eintreibvorgang, das heisst beim Setzen mittels eines beispielsweise pulverkraftbetriebenen Setzgerätes wird die Hülse 8, 16 vom konischen Schaft 1, 9 mitgenommen und auf die an dem zu befestigenden Blech aufliegende Rondelle 4, 12 aufgeschoben. Je nach vorhandener Energie, die vom Setzgerät aufgebracht wird, erfolgt eine mehr oder weniger starke Verformung der Hülse 8, 16. Dank der konischen Innenform der Hülse 8, 16 erfolgt eine Übertragung aller Kräfte, insbesondere auf die äussere Umfangskontur der Rondelle 4, 12. Dadurch wird - insbesondere auch im Zusammenhang mit der Steifigkeit der Rondelle 4, 12 - das zu befestigende Blech bis zur äusseren Umfangskontur von der Rondelle 4, 12 niedergehalten, was zu den erwünscht grossen Querzugswerten führt.

## Patentansprüche

1. Nagel mit konischem Schaft (1, 9), ballistischer Spitze (2, 10), Kopf (3, 11) entgegen dem Eintreibende, sowie auf dem schaft (1, 9) aufgezogener Rondelle (4, 12) und Hülse (8, 16), **dadurch gekennzeichnet**, dass die Rondelle (4, 12) im Bereich der Spitze (2, 10) und die Hülse (8, 16) zwischen Rondelle (4, 12) und Kopf (3, 11) angeordnet sind, wobei die Rondelle (4, 12) gegenüber der Hülse (8, 16) eine höhere Steifigkeit aufweist.

2. Nagel nach Anspruch 1, dadurch gekennzeichnet, dass die Rondelle (4, 12) und die Hülse (8, 16) einen korrespondierenden, zum Kopf (3, 11) hin sich verjüngenden Konus als Innenform der Hülse (8, 16) und Aussenform (5, 13) der Rondelle (4, 12) aufweisen.

3. Nagel nach Anspruch 1 oder 2, dadurch gekennzeichnet, dass die Rondelle (4, 12) zur Spitze (2, 10) hin eine sich nach aussen erweiternde Ausnehmung (6, 14) aufweist.

4. Nagel nach einem der Ansprüche 1 bis 4, dadurch gekennzeichnet, dass die Rondelle (4, 12) eine zur Spitze (2, 10) hin offene flächenmässige Vertiefung (7, 15) aufweist.

5. Nagel nach einem der Ansprüche 1 bis 4, dadurch gekennzeichnet, dass der Aussendurchmesser der Hülse (8, 16) höchstens dem Aussendurchmesser der Rondelle (4, 12) entspricht.

6. Nagel nach einem der Ansprüche 1 bis 5, dadurch gekennzeichnet, dass die Hülse (8, 16) eine Federkraft von 500 bis 2000 N auf die Rondelle (4, 12) aufbringt.

## Claims

1. Nail comprising a conical shaft (1, 9), a ballistic tip (2, 10), a head (3, 11) towards the insertion end, and a rondel (4, 12) and a sleeve (8, 16) pushed onto the shaft (1, 9), **characterised in that** the rondel (4, 12) is arranged in the area of the tip (2, 10) and the sleeve (8, 16) is arranged between the rondel (4, 12) and the head (3, 11), and that the rondel (4, 12) offers more rigidity relative to the sleeve (8, 16).

2. Nail according to claim 1, **characterised in that** the rondel (4, 12) and the sleeve (8, 16) comprise a corresponding cone, which narrows towards the head (3, 11), as an inside shape of the sleeve (8, 16) and an outside shape (5, 13) of the rondel (4, 12).

3. Nail according to claim 1 or 2, **characterised in that** the rondel (4, 12) comprises a cut-out (6, 14) which widens towards the tip (2, 10) in the direction of the exterior.

4. Nail according to one of claims 1 to 4, **characterised in that** the rondel (4, 12) comprises a surface recess (7, 15) which is open towards the tip (2, 10).

5. Nail according to one of claims 1 to 4, **characterised in that** the outside diameter of the sleeve (8, 16) equals maximum the outside diameter of the rondel (4, 12).

6. Nail according to one of claims 1 to 5, **characterised in that** the sleeve (8, 16) offers an elastic force between 500 and 2000 N towards the rondel (4, 12).

## Revendications

1. Clou, comprenant une tige conique (1, 9), une pointe balistique (2, 10), une tête (3, 11) à l'opposé de l'extrémité d'enfoncement, ainsi qu'une rondelle (4, 12) et une douille (8, 16) emmanchées sur la tige (1, 9), caractérisé en ce que la rondelle (4, 12) est disposée dans la région de la pointe (2, 10) et que la douille (8, 16) est prévue entre la rondelle (4, 12) et la tête (3, 11), la rondelle (4, 12) présentant une rigidité plus grande que celle de la douille (8, 16).

2. Clou selon la revendication 1, caractérisé en ce que la rondelle (4, 12) et la douille (8, 16) présentent un cône correspondant qui se rétrécit en direction de la tête (3, 11) en tant que forme intérieure de la douille (8, 16) et forme extérieure (5, 13) de la rondelle (4, 12).

3. Clou selon l'une des revendications 1 ou 2, caractérisé en ce que la rondelle (4, 12) comporte un évidement (6, 14) qui s'élargit vers l'extérieur en direction de la pointe (2, 10).

4. Clou selon l'une des revendications 1 à 3, caractérisé en ce que la rondelle (4, 12) comporte un creux (7, 15) plat ouvert en direction de la pointe (2, 10).

5. Clou selon l'une des revendications 1 à 4, caractérisé en ce que le diamètre extérieur de la douille (8, 16) correspond au plus au diamètre extérieur de la rondelle (4, 12).

6. Clou selon l'une des revendications 1 à 5, caractérisé en ce que la douille (8, 16) applique à la rondelle (4, 12) une force de ressort de 500 à 2000 N.
